# FASCICULE DE BREVET EUROPEEN

(11) **EP 3 137 239 B1**
(45) Date de publication et mention de la délivrance du brevet: **11.04.2018**
(21) Numéro de dépôt: 15724181.1
(22) Date de dépôt: 30.04.2015
(51) Int. Cl.: B21D 5/14, B21C 37/08, B21D 17/04, F16L 25/10

(54) **PROCÉDÉ ET DISPOSITIF DE FABRICATION D'UN ÉLÉMENT DE CALORIFUGEAGE TUBULAIRE EN TÔLE METALLIQUE**
VERFAHREN UND VORRICHTUNG ZUR HERSTELLUNG EINES ROHRFÖRMIGEN SCHALUNGSELEMENTS AUS METALLBLECH
METHOD AND DEVICE FOR MANUFACTURING A TUBULAR LAGGING ELEMENT FROM SHEET METAL

(30) Priorité: 02.05.2014 LU 92442
(43) Date de publication de la demande: 08.03.2017
(73) Titulaire: Interver Management S.A., 8362 Grass (LU)
(72) Inventeur: VANDEVELDE, Pierre, B-6041 Gosselies (BE)
(74) Mandataire: Office Freylinger
(86) Numéro de dépôt international: PCT/EP2015/059585
(87) Numéro de publication internationale: WO 2015/166078

(56) Documents cités:
- FR-A1- 2 566 094
- US-A- 3 858 785
- US-A- 3 921 883

## Description

### Domaine technique

La présente invention concerne un procédé et un dispositif de fabrication d'éléments de calorifugeage tubulaires en tôle métallique, selon les préambules des revendications 1 et 7 respectivement, que l'on désignera par la suite également par les noms de tuyaux ou de virole. De tels éléments, typiquement de forme cylindrique, et de longueurs de l'ordre de 1000 ou 1250 mm, communément appelés aussi «section droite» sont utilisés pour le calorifugeage de conduites de fluides caloporteurs. Ils sont constitués d'un flan en tôle de forme rectangulaire poinçonné, qui est ensuite cintré, en restant ouvert selon une génératrice, de manière à pouvoir être inséré latéralement autour du conduit à calorifuger. Les deux bords longitudinaux opposés sont ensuite raccordés l'un sur l'autre, au moyen de vis d'assemblage par exemple. Par ailleurs, les extrémités axiales de ces éléments de calorifugeage sont conformées de manière que les éléments puissent être assemblés les uns aux autres par emboîtement. Le principe général d'assemblage en ligne droite retenu est l'emboitement avec une moulure mâle et femelle, cet emboitement permettant d'assurer une bonne étanchéité à l'eau et une rigidité suffisante, que ce soit pour un montage en pose verticale ou horizontale.

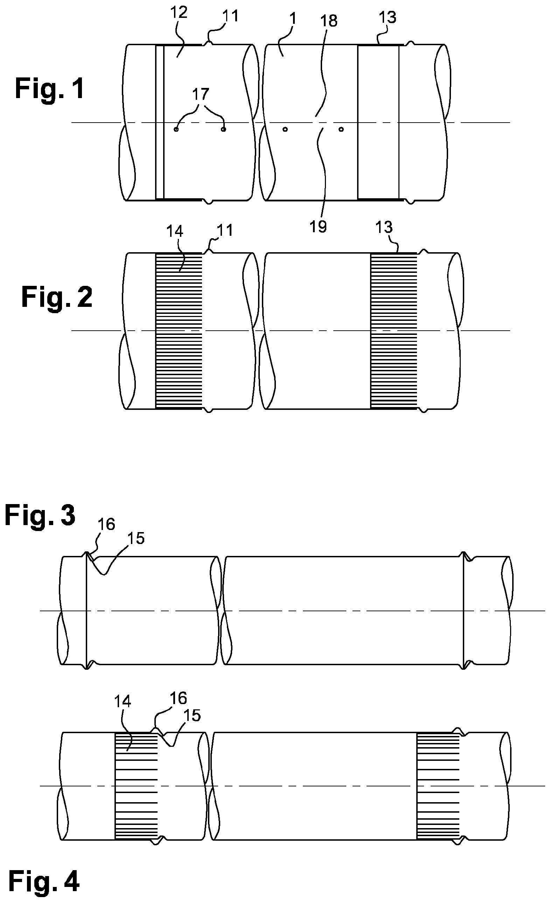

L'emboitement des éléments de calorifugeage peut cependant se faire selon différentes techniques, dont quelques exemples sont illustrés sur les figures 1 à 4, qui représentent des éléments de tuyaux assemblés, chaque tuyau 1 étant constitué d'un flan de tôle roulé fermé par le raccordement des bords longitudinaux 18, 19. La figure 1 illustre un emboîtement avec une moulure périphérique 11 formée en relief vers une extrémité 12 d'un diamètre inférieur du tuyau 1, la moulure constituant une butée lorsque la dite extrémité d'un diamètre inférieur est emboîtée dans l'extrémité opposée cylindrique 13 d'un autre tuyau. La figure 2 illustre un système d'emboîtement similaire mais avec un rétreint 14 à la place de la « conicité » de l'exemple précédent, ce rétreint étant obtenu par la formation d'ondulations axiales réparties sur le pourtour du tuyau. La figure 3 illustre un emboîtement de type bord à bord, une extrémité comportant une moulure en creux 15 formée juste au bord du tuyau, dans laquelle s'insère le bord d'une moulure en relief 16 formé sur l'autre extrémité. La figure 4 illustre un emboîtement de type à recouvrement, avec une extrémité avec un rétreint 14 et ondulations et une moulure en creux 15 à la limite du rétreint, l'autre extrémité du tuyau s'insérant sur ledit rétreint et comportant en plus une moulure 16 en relief dont le bord s'insère dans ladite moulure en creux.

Dans tous les cas, les moulures ou ondulations formées vers les extrémités axiales des éléments créent une déformation de toute l'épaisseur de la tôle, qui doit par ailleurs rester lisse et sans déformation entre ces zones déformées d'extrémités.

La matière des tôles utilisées pour fabriquer ces tuyaux dépend largement de l'application. Ils peuvent notamment être en aluminium, acier prépeint, acier inoxydable ou acier galvanisé, l'épaisseur de la tôle pouvant varier généralement de 0.4 à 1mm.

### Etat de la technique

Actuellement, la fabrication des éléments de calorifugeage, à partir de tôles fournies en bobines, comporte la succession d'étape suivante :
A) Découpe et mise à dimensions du flan (largeur 1000-1250 mm, longueur = diamètre*π + surlongueur pour le recouvrement),
B) Poinçonnage du flan pour réaliser les trous de vis pour la fermeture du tuyau,
C) Moulurage longitudinal, pour former une ou deux moulures utilisées aussi pour la fermeture,
D) Roulage, ou cintrage, du flanc au diamètre requis pour obtenir une virole, au moyen d'une rouleuse,
E) Prémontage de la virole avec quelques vis pour avoir une rigidité suffisante,
F) Façonnage des extrémités, par exemple selon les formes décrites précédemment pour permettre l'assemblage des tuyaux bout à bout. Le façonnage des extrémités est réalisé sur une bordeuse.
G) Démontage des vis pour permettre d'emboiter les viroles l'une dans l'autre, pour notamment réduire l'encombrement lors du transport.

L'opération de façonnage des extrémités est très importante et doit être réalisée avec un grand soin par un homme de métier, la profondeur des moulures et la répétabilité du résultat étant importants pour garantir par la suite un montage et un assemblage homogène des éléments de calorifugeage entre eux.

On connaît, notamment par EP1518616, EP1724033, EP1213063, des machines dédiées à ce façonnage, appelées bordeuses. Mais globalement les opérations de façonnage des moulures restent en grande partie manuelles et impliquent une multitude d'opération, entraînant une fatigue physique des opérateurs. Egalement, la répétabilité des opérations sur la bordeuse, est dépendante de l'opérateur, la précision de la profondeur des moulures étant fonction notamment de la dextérité de l'opérateur.

De plus, les opérations de roulage et de moulurage, avec réalisation d'un côté mâle et d'un côté femelle, induisent une déformation de l'élément cylindrique, un côté étant sous-roulé et l'autre sur-roulé, les éléments de calorifugeage étant finalement déformés.

Ces problèmes sont encore accrus lors de l'utilisation de tôles difficiles à travailler, telles que de la tôle de forte épaisseur, par exemple en acier inoxydable de type inox 316 jusqu'à 1 mm d'épaisseur, qui va demander plus d'effort que pour une tôle d'aluminium de faible épaisseur. L'effort mécanique exercé pour l'opération de roulage et surtout de moulurage doit être suffisant pour atteindre la déformation souhaitée. Il en résulte qu'il peut être nécessaire de réaliser plusieurs passes sur la bordeuse en modifiant entre chacune les réglages de la bordeuse pour arriver aux reliefs ou profondeurs de moulures souhaités.

Un inconvénient supplémentaire est que la surface de la virole ou tuyau risque d'être abimée lors des diverses manipulations requises et en particulier lors de plusieurs passages successifs dans la rouleuse. Dans le cas de flans en acier revêtu, ces détériorations posent un problème esthétique mais aussi un risque de corrosion ultérieurement.

Un autre inconvénient encore est que ce mode de fabrication nécessite un pré-assemblage, avec vissage, avant d'effectuer le façonnage des extrémités, et nécessite aussi, après le façonnage, la dépose des vis utilisées pour le pré-assemblage des bords et le désassemblage desdits bords pour conditionner les viroles, emboîtées les unes dans les autres, pour leur transport. Outre la perte de temps entraînée par ces opérations, elles accroissent le risque de détérioration de la surface des éléments de calorifugeage.

Par ailleurs, on connaît aussi par US3858785 et US3921883 des procédés de fabrications de tubes comportant des reliefs périphériques, ou ondulations, où lesdits reliefs sont formés sur les tôles avant que celles-ci soient cintrées pour former un tube. Mais ces tubes sont des tubes soudés, destinés à de échangeurs thermiques, et soit les reliefs sont formés sur une ou deux faces mais de manière que le relief d'une face n'ait pas d'incidence sur l'autre face, comme dans US3858785, soit les ondulations sont réalisées de manière continue sur toute la longueur du tube, comme dans US3921883. Outre que ces tubes, destinées à des échangeurs de chaleur, n'ont pas du tout les mêmes caractéristiques et fonctionnalités que les tubes de calorifugeage selon l'invention, les reliefs qui leurs sont conférés ne posent pas du tout les mêmes problèmes que les éléments de calorifugeage objets de l'invention, et en particulier les procédés de fabrication de US3858785 et US3921883 ne permettent pas de réaliser des éléments tubulaires dont seules les extrémités sont conformées pour obtenir des moulures périphériques ou des ondulations, et la partie située entre ces extrémités restant uniformément lisse sans déformation autre que celle résultant du cintrage de la tôle pour lui donner la forme tubulaire.

### Objet de l'invention

La présente invention a pour but de remédier aux problèmes ci-dessus et vise en particulier à proposer un procédé et une machine qui automatisent les opérations de roulage et moulurage en une seule opération, et ce avec une grande constance dans le résultat, et donc une amélioration de la qualité des pièces fabriquées. Elle vise aussi à réduire les manipulations et le temps requis autant pour la fabrication des éléments de calorifugeage que pour les réglages de la machine. Elle vise encore à supprimer l'effet de sur-roulage et sous roulage.

### Description générale de l'invention

Avec ces objectifs en vue, l'invention a pour objet un procédé de fabrication d'un élément de calorifugeage tubulaire en tôle métallique avec les étapes de la revendication 1, le dit élément étant constitué d'un flan en tôle cintré dont deux bords longitudinaux opposés sont raccordés l'un avec l'autre selon une ligne de raccord longitudinale, ledit élément comportant un relief périphérique formé sur la tôle uniquement à proximité d'au moins une extrémité axiale de l'élément, constituée par un bord du flan orthogonal aux bords longitudinaux, sur la périphérie de l'élément, ledit relief affectant la tôle sur toute son épaisseur.

Selon l'invention, ce procédé est caractérisé en ce qu'on forme ledit relief au défilement sur le bord du flan, (bord qui constituera par la suite une extrémité axiale de l'élément de calorifugeage), le flan en tôle étant maintenu à plat et entraîné en défilement entre deux rouleaux de façonnage selon une direction parallèle audit bord, puis on effectue le cintrage du flan comportant le dit relief par un rouleau de cintrage coopérant avec un des rouleaux de façonnage pour cintrer le flan à sa sortie de l'entrefer entre les rouleaux de façonnage, immédiatement à la suite du façonnage du relief lors du défilement du flan, en un seul passage.

Selon l'art antérieur, le façonnage des extrémités des éléments de calorifugeage est réalisé après que l'on a donné à cet élément sa forme cylindrique par roulage et pré-assemblage de ses bords longitudinaux, ce qui entraîne les problèmes évoqués précédemment. Contrairement à cela, selon la présente invention, on réalise en premier les façonnages souhaités sur les bords du flan maintenu à plat, et on effectue le roulage ou cintrage, ensuite, au défilé immédiatement à la suite du façonnage du relief lors du défilement du flan, en une seule passe (un seul passage).

Le façonnage du relief est effectué en passant le flan entre deux rouleaux de façonnage, et le cintrage est effectué par un rouleau de cintrage coopérant avec un des rouleaux de façonnage pour cintrer le flan immédiatement à sa sortie de l'entrefer entre les rouleaux de façonnage. Cette disposition permet d'une part de n'utiliser qu'un seul rouleau supplémentaire pour l'opération de cintrage. D'autre part, associé au fait que les façonnages sont effectués simultanément sur les deux côtés du flan par les formes adaptées à cet effet des extrémités des rouleaux, cela permet aussi d'effectuer le cintrage alors que les moulures formées par les rouleaux de façonnage sont encore en contact, avec le rouleau de façonnage, guidées et soutenues par le rouleau de façonnage sur lequel le flan s'enroule partiellement sous l'effet du cintrage.

Selon une disposition préférentielle, on forme le relief périphérique en au moins deux étapes de façonnage, comportant une étape d'ébauche et une étape de finition, réalisées successivement lors du défilement de la tôle, chaque étape étant effectuée par un jeu de deux rouleaux de façonnage. Cette disposition permet de réaliser les reliefs en au moins deux étapes, provoquant à chaque étape des déformations plus réduite sur les bords du flan, et donc générant moins de contraintes résiduelles dans la matière du flan. Cette diminution des contraintes résiduelles est favorable pour éviter des déformations d'ensemble du tuyau formé et se traduit par un profil plus régulier et l'élimination du sur-roulage, avec finalement l'obtention d'un tuyau avec des diamètres identiques sur les moulures mâles et femelles réalisées respectivement aux extrémités opposées du tuyau. Ainsi, le cintrage est réalisé pratiquement simultanément au façonnage des bords, ce qui évite ou au moins limite les risques de déformations du tuyau, telles que les défauts de sur-roulage et sous-roulage pré-mentionnés.

De plus, les efforts requis pour déformer les bords du flan sont plus réduits, ce qui permet d'utiliser une machine moins rigide, donc moins encombrante et moins coûteuse. Il a aussi été constaté que le moulurage des extrémités en une seule passe provoque un laminage de la matière et une détérioration très nette de l'état de surface. Le fait de travailler en deux passes atténue fortement ou supprime complètement ce phénomène.

Un avantage notable de la méthode est qu'elle est parfaitement adaptée pour des applications même à des épaisseurs et des rigidités importantes.

Le procédé selon l'invention permet de réaliser les façonnages utilisés antérieurement, dans lequel le relief périphérique comporte une moulure périphérique en creux ou en relief ou un rétreint ou une ondulation.

L'invention a aussi pour objet un dispositif de fabrication d'un tel élément de calorifugeage tubulaire en tôle métallique avec les caractéristiques énoncées dans le préambule de la revendication 7, caractérisé en ce que qu'il comporte successivement, selon une direction de défilement perpendiculaire à l'axe de l'élément de calorifugeage à réaliser,
- un ensemble d'entraînement pour amener le flan à plat selon la direction de défilement,
- un ensemble de rouleaux de façonnage comportant des galets de façonnage pour former le relief sur le bord du flan, et
- un ensemble de cintrage, situé immédiatement en aval de l'ensemble de rouleaux de façonnage, pour cintrer le flan comportant ledit relief, l'ensemble de cintrage comportant un rouleau de cintrage mobile transversalement à la direction de défilement et des moyens d'ajustement de la position du rouleau de cintrage par rapport aux rouleaux de façonnage.

Préférentiellement, l'ensemble de rouleaux de façonnage comporte, successivement dans le sens de défilement, un jeu de rouleaux d'ébauche et un jeu de rouleaux de finition. Tenant compte que l'effort mécanique exercé pour l'opération de roulage et surtout de moulurage doit être suffisant pour atteindre la déformation souhaitée, il est avantageux d'utiliser au moins deux jeux de rouleaux de façonnage agissant successivement, qui permettent de réduire les efforts nécessaires à la déformation plastique du flan, et donc la puissance et la rigidité de la machine, sans nuire à la qualité des moulures et du tuyau fini.

Il est à noter que la machine peut par exemple fonctionner sous une tension électrique de 220 Volts mono et être montée sur des roulettes orientables. La machine peut ainsi être déplacée partout dans l'atelier et mise sur n'importe quelle prise de courant, et peut facilement être utilisée sur chantier.

Selon une autre disposition préférentielle, les galets de façonnage sont liés de manière démontable aux extrémités des rouleaux de façonnage. Egalement, les extrémités des rouleaux de façonnage sont supportées dans des paliers montés sur des chariots déplaçables transversalement pour permettre de libérer les extrémités des rouleaux pour l'interchangeabilité des galets de façonnage et/ou permettre l'utilisation de rouleaux de différentes longueurs. Ces dispositions permettent de changer facilement les galets en fonction des façonnages à réaliser, et aussi de changer les rouleaux pour adapter leur longueur à la largeur des flans. Par conséquent, le dispositif s'adapte aisément et rapidement à différentes largeurs de tôles.

Au vu de ce qui précède, l'homme de métier appréciera que le procédé et le dispositif décrit ici bénéficient d'une grande universalité par le fait qu'ils sont utilisables pour un nombre important de largeurs, d'épaisseurs et de types différents de matières.

Selon une autre disposition encore, le rouleau de cintrage est agencé sur un support de cintrage, mobile transversalement à la direction de défilement entre une position de retrait et une position de cintrage dans laquelle le rouleau de cintrage est amené à hauteur du plan de défilement du flan, pour coopérer avec un rouleau de façonnage du jeu de rouleaux de façonnage situé le plus en aval dans le sens de défilement, pour cintrer le flan. Le réglage du cintrage et donc son adaptation en fonction du diamètre des tuyaux à fabriquer peuvent donc se faire très aisément.

### Brève description des dessins

D'autres particularités et caractéristiques de l'invention ressortiront de la description détaillée d'un mode de réalisation avantageux de la machine et de sa mise en oeuvre, présentés ci-dessous, à titre d'illustration, en se référant aux dessins annexés dans lesquels :
Les figures 1 à 4, déjà commentées, montrent différentes réalisations des moulures et des façonnages réalisés aux extrémités des éléments de calorifugeage connus;
La figure 5 est une vue d'ensemble de la machine, vue en perspective du côté de la sortie des tuyaux roulés ;
La figure 6 est une vue en coupe transversale de la machine ;
La figure 7 est une vue partielle frontale montrant les rouleaux de façonnage en position d'utilisation ;
La figure 8 est une vue correspondant à la figure 7, en vue de dessus ;
La figure 9 une vue partielle frontale montrant les rouleaux de façonnage en position de remplacement des galets de façonnage ;
La figure 10 est une vue correspondant à la figure 9, en vue de dessus.

### Description d'une exécution préférée

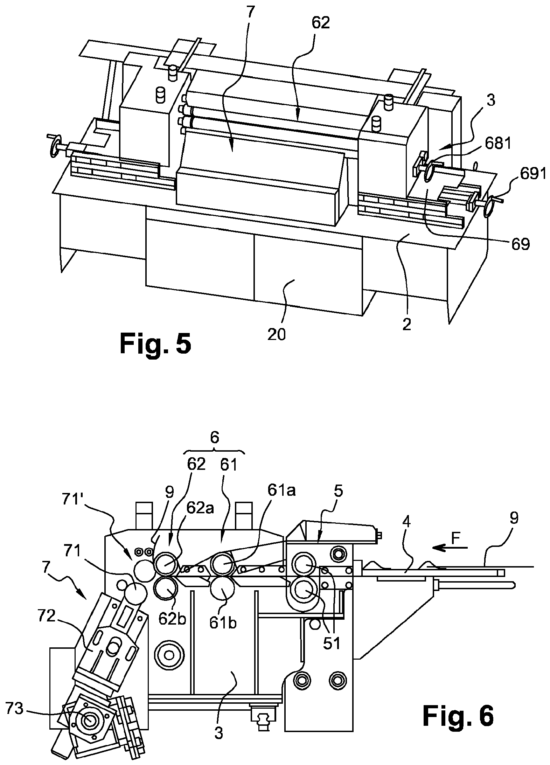

La machine conforme à un mode de réalisation préféré de l'invention représentée en figure 5 comporte un socle 2 monté sur roulettes et pourvu d'un coffre 20 de rangement des galets de façonnage, et un bâti 3 assurant la rigidité de la machine, posé sur le socle 2.

La machine comporte par ailleurs:
- une table d'alimentation 4 supportée sur le bâti 3,
- un ensemble d'entraînement 5,
- un ensemble de rouleaux de façonnage 6,
- un ensemble de cintrage 7.

L'ensemble d'entraînement 5 comporte un jeu de rouleaux pinceurs 51 motorisés pour saisir les flans déposés sur la table d'alimentation 4 et les entraîner dans le sens de défilement, selon la flèche F, vers l'ensemble de rouleaux de façonnage 6.

L'ensemble de rouleaux de façonnage 6 comporte deux jeux de rouleaux de façonnage : un jeu 61 de rouleaux d'ébauche 61a, 61b et un jeu 62 de rouleaux de finition 62a, 62b. Tous ces rouleaux sont motorisés. Chaque rouleau de façonnage comporte un rouleau cylindrique central 63 dont les extrémités sont montées liées en rotation sur des demi-arbres d'entrainement 64 qui portent également, adjacents aux extrémités du rouleau cylindrique, des galets de façonnage 65a, 65b, 66a, 66b. Pour chaque rouleau, les demi-arbres, les galets de façonnage et le rouleau cylindrique sont liés en rotation de manière démontable.

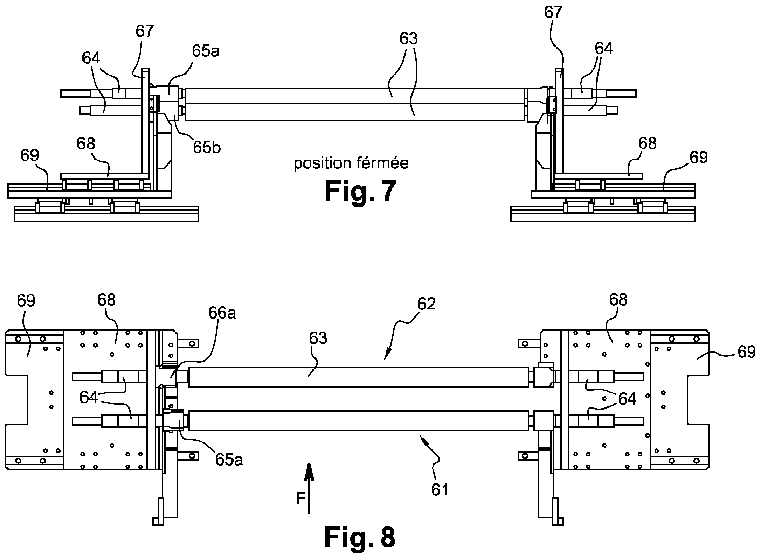

Les demi-arbres entrainés en rotation par les moteurs, non représentés, sont montés dans des paliers 67 fixés sur des chariots supérieurs 68 déplaçables selon la direction axiale des rouleaux, les chariots supérieurs étant eux-mêmes montés sur des chariots inférieurs 69 déplaçables selon ladite direction axiale, comme illustré sur les figures 7 à 10. Comme on le voit figure 5, les chariots sont guidés sur des glissières et déplaçables au moyen des manivelles 681, 691.

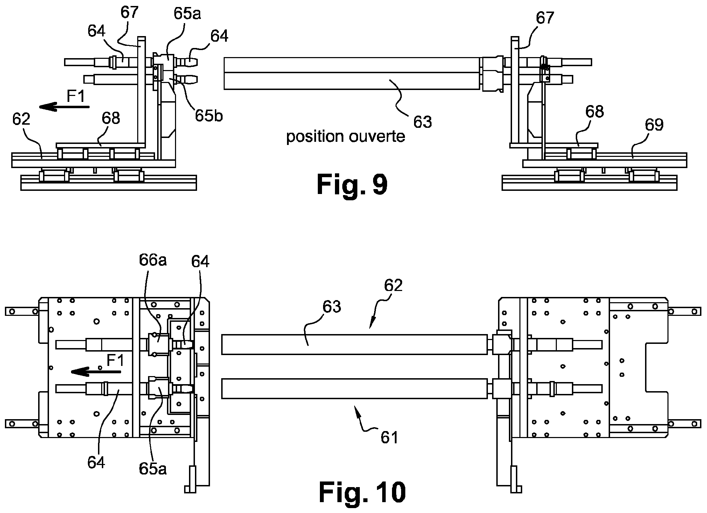

Les chariots supérieurs 68 peuvent être déplacés, dans le sens d'un écartement relatif, représenté par la flèche F1 sur les figures 9 et 10 lorsqu'un changement de galets de façonnage, de 1^{ère} ou 2^{ième} passe, est nécessaire. Le déplacement des chariots supérieurs 68 permet de dégager les demi-arbres 64 par rapport aux rouleaux cylindriques 63, comme montré sur la gauche des figures 9 et 10, permettant également de remplacer les galets de façonnage 65, 66. Le changement de galets est très rapide grâce à cette structure mobile.

Le changement de position des chariots inférieurs 69 permet de mettre en place et d'utiliser des rouleaux cylindriques 63 de différentes longueurs, adaptés à la largeur des flans de tôle utilisés, typiquement de 1000 à 1250 mm. On notera que le déplacement possible des chariots supérieurs sur les chariots inférieurs permet toujours, quelle que soit la largeur des flans traités, le remplacement aisé des galets, comme indiqué précédemment.

Les galets sont interchangeables, par jeu de deux galets appariés 65a, 65b ; 66a, 66b, un galet 65a, 66a pour le rouleau supérieur 61a, 62a de chaque jeu de rouleau, l'autre galet 65b, 66b pour le rouleau inférieur 61b, 62b. Le profil des galets est choisi en fonction des moulures ou autres façonnages à former sur les extrémités des tuyaux 1, et les paires de galets sont également adaptées en fonction des déformations à obtenir pour chaque jeu de rouleau, d'ébauche et de finition respectivement. Typiquement et pour chaque côté, on aura donc un jeu de galets d'ébauche 65a, 65b montés sur les demi arbres d'extrémité des rouleaux d'ébauche 61, et un jeu de galets de finition 66a, 66b montés sur les demi arbres d'extrémité des rouleaux de finition 62. Tous les galets étant interchangeables, cela offre une flexibilité totale d'utilisation de la machine, pour former par exemple sur un côté du flan, et donc sur une extrémité du tuyau, un rétreint et une moulure femelle, et sur l'autre côté, et donc l'autre extrémité du tuyau, une autre moulure plus profonde et un retreint moins large. Ceci constitue un avantage énorme pour l'homme de métier.

Dans certains cas, notamment lors de l'utilisation de flans en matière relativement tendre, par exemple en aluminium, on pourra réaliser les façonnages en une seule étape, par un seul jeu de galets monté sur les rouleaux de finition. Dans ce cas, on montera sur les rouleaux d'ébauche des galets en caoutchouc, qui ne serviront pas à déformer le flan mais participeront seulement à son entraînement et guidage. Cette possibilité présente l'avantage que, pour un changement de profil des extrémités de rouleaux, il sera possible de ne changer que les galets des rouleaux de finition, ce qui procure un gain de temps, et accroît la souplesse d'utilisation de la machine.

Se reportant à la figure 6, on voit que l'ensemble de cintrage 7 comporte un rouleau de cintrage 71 monté sur un chariot 72 mobile transversalement à la direction de défilement et des moyens 73 d'ajustement de la position du rouleau de cintrage 71 mobile par rapport au jeu de rouleaux de façonnage de finition 62, pour pouvoir régler la position relative entre le rouleau de cintrage 71 et le rouleau de finition supérieur 62a avec lequel il coopère pour cintrer le flan, en fonction du rayon de cintrage désiré. Comme on le voit sur la figure 6, le chariot 72 est mobile selon une direction inclinée par rapport au plan de flan, de manière que le rouleau de cintrage 71 puisse être positionné au plus près du rouleau de finition supérieur 62a, qui sert également de rouleau de support du flan, pour le cintrage avec un rayon de cintrage minimal.

La mise en oeuvre de la machine se déduit aisément de la description qui vient d'être faite de la machine. Pour réaliser un élément de calorifugeage 1, à partir d'un flan prédécoupé aux dimensions requises, le flan 9 est amené sur la table d'alimentation 4, saisi entre les rouleaux pinceurs 51 de l'ensemble d'entraînement 5 qui insèrent le flan entre les rouleaux de façonnage d'ébauche 61a, 61b. Les galets de façonnage d'ébauche 65a, 65b effectuent alors une première déformation des bords du flan, déformation qui est finalisée, lorsque le flan passe ensuite entre les rouleaux de finition 62a, 62b, par les galets de finition 66a, 66b. Dès la sortie du flan de l'entrefer entre les rouleaux de finition, le flan est repoussé vers le haut par le rouleau de cintrage 71, représenté en position haute par le repère 71' sur la figure 6, ce qui provoque le cintrage du flan 9 avec la courbure désirée, ajustée par le réglage en position du chariot de l'ensemble de cintrage 7. Lorsque le flan est entièrement roulé, il est dégagé de l'emprise des rouleaux de façonnage et de cintrage, et peut être saisi par l'opérateur ou un moyen de préhension adapté, prêt pour son utilisation.
La machine selon l'invention peut être intégrée dans une ligne complète de fabrication assurant préalablement la découpe du flan à partir de tôle provenant d'une bobine, et la réalisation des trous pour les vis de fermeture des tuyaux, et amenant le flan ainsi préparé sur la table d'alimentation la fabrication des éléments de calorifugeage pouvant alors être entièrement automatisée.

## Revendications

1. Procédé de fabrication d'un élément de calorifugeage (1) tubulaire en tôle métallique, le dit élément étant constitué d'un flan en tôle cintré dont deux bords longitudinaux opposés (18, 19) sont raccordés l'un avec l'autre selon une ligne de raccord longitudinale, ledit élément comportant un relief périphérique (11, 14, 15, 16) formé sur la tôle uniquement à proximité d'au moins une extrémité axiale de l'élément, constituée par un bord (12,13) du flan orthogonal aux bords longitudinaux, sur la périphérie de l'élément, ledit relief affectant la tôle sur toute son épaisseur,
**caractérisé en ce qu'**on forme ledit relief au défilement sur le bord (12, 13) du flan (9) en tôle maintenu à plat et entraîné en défilement entre deux rouleaux de façonnage (62a, 62b) selon une direction (F) parallèle audit bord, puis on effectue le cintrage du flan comportant le dit relief par un rouleau de cintrage (71) coopérant avec un des rouleaux de façonnage (62a) pour cintrer le flan à sa sortie de l'entrefer entre les rouleaux de façonnage, immédiatement à la suite du façonnage du relief lors du défilement du flan, en un seul passage.

2. Procédé selon la revendication 1, dans lequel on forme le relief périphérique en au moins deux étapes de façonnage, comportant une étape d'ébauche et une étape de finition, réalisées successivement lors du défilement de la tôle, chaque étape étant effectuée par un jeu de deux rouleaux de façonnage.

3. Procédé selon la revendication 1, dans lequel le relief périphérique comporte une moulure périphérique en creux ou en relief.

4. Procédé selon la revendication 1, dans lequel le relief périphérique comporte un rétreint ou une ondulation.

5. Procédé selon la revendication 1, dans lequel le flan en tôle a une épaisseur de 0,4 à 1 mm.

6. Procédé selon la revendication 1, dans lequel le flan en tôle est en aluminium, acier prépeint, acier inoxydable ou acier galvanisé.

7. Dispositif de fabrication d'un élément de calorifugeage tubulaire en tôle métallique, le dit élément (1) étant constitué d'un flan (9) en tôle cintré dont deux bords longitudinaux opposés (18,19) sont raccordés l'un avec l'autre selon une ligne de raccord longitudinale, ledit élément comportant un relief périphérique (11, 14, 15, 16) formé sur la tôle uniquement à proximité d'au moins une extrémité axiale de l'élément, sur la périphérie de l'élément, **caractérisé en ce que** qu'il comporte successivement, selon une direction de défilement perpendiculaire à l'axe de l'élément de calorifugeage à réaliser,
- un ensemble d'entraînement (5) pour amener le flan (9) à plat selon la direction de défilement (F),
- un ensemble de rouleaux de façonnage (61, 62) comportant des galets de façonnage (65, 66) pour former le relief sur le bord du flan, et
- un ensemble de cintrage (7), situé immédiatement en aval de l'ensemble de rouleaux de façonnage, pour cintrer le flan comportant ledit relief, l'ensemble de cintrage (7) comportant un rouleau de cintrage (71) mobile transversalement à la direction de défilement (F) et des moyens (73) d'ajustement de la position du rouleau de cintrage (71) par rapport aux rouleaux de façonnage (62).

8. Dispositif selon la revendication 7, dans lequel l'ensemble de rouleaux de façonnage comporte, successivement dans le sens de défilement, un jeu de rouleaux d'ébauche (61) et un jeu de rouleaux de finition (62).

9. Dispositif selon la revendication 7, dans lequel les galets de façonnage (65, 66) sont liés de manière démontable aux extrémités des rouleaux de façonnage (61, 62).

10. Dispositif selon la revendication 7, dans lequel les extrémités des rouleaux de façonnage (61, 62) sont supportés dans des paliers (67) montés sur des chariots (68, 69) déplaçables transversalement pour permettre de libérer les extrémités des rouleaux pour l'interchangeabilité des galets de façonnage et/ou permettre l'utilisation de rouleaux de différentes longueurs.

11. Dispositif selon la revendication 7, dans lequel le rouleau de cintrage (71) est monté sur un chariot (72) mobile transversalement à la direction de défilement (F).

12. Dispositif selon la revendication 7, dans lequel l'ensemble d'entraînement (5) comporte un jeu de rouleaux pinceurs (51).

## Patentansprüche

1. Verfahren zur Herstellung eines rohrförmigen Wärmeisolierelements (1) aus Metallblech, wobei das Element aus einem gebogenen Blechzuschnitt besteht, dessen zwei gegenüberliegende Längskanten (18, 19) entlang einer Längsverbindungslinie miteinander verbunden sind, wobei das Element eine umlaufende Erhöhung (11, 14, 15, 16) aufweist, die auf dem Blech nur in der Nähe wenigstens eines axialen Endes des Elements, das durch einen Rand (12, 13) des Zuschnitts senkrecht zu den Längskanten gebildet ist, auf dem Umfang des Elements ausgebildet ist, wobei die Erhöhung in ihrer gesamten Dicke auf dem Blech vorgesehen ist, **dadurch gekennzeichnet, dass** die Erhöhung am Rand (12, 13) des plan gehaltenen und zwischen zwei Formwalzen (62a, 62b) in einer Richtung (F) parallel zum Rand laufangetrieben Blechzuschnitts (9) beim Durchlaufen ausgebildet wird, und anschließend das Biegen des die Erhöhung aufweisenden Zuschnitts mit einer Biegewalze (71) durchgeführt wird, die mit einer der Formwalzen (62a) zusammenwirkt, um den Zuschnitt bei seinem Austritt aus dem Spalt zwischen den Formwalzen unmittelbar im Anschluss an die Ausformung der Erhöhung beim Durchlaufen des Zuschnitts in einem einzigen Arbeitsgang zu biegen.

2. Verfahren nach Anspruch 1, wobei die umlaufende Erhöhung in mindestens zwei Formschritten ausgebildet wird, welche einen Vorformschritt und einen Fertigformschritt umfassen, die beim Durchlaufen des Blechs nacheinander ausgeführt werden, wobei jeder Schritt mit einem Satz bestehend aus zwei Formwalzen durchgeführt wird.

3. Verfahren nach Anspruch 1, wobei die umlaufende Erhöhung eine vertiefte oder erhabene Leiste aufweist.

4. Verfahren nach Anspruch 1, wobei die umlaufende Erhöhung eine Einschnürung oder eine Wellung aufweist.

5. Verfahren nach Anspruch 1, wobei der Blechzuschnitt eine Dicke von 0,4 bis 1 mm hat.

6. Verfahren nach Anspruch 1, wobei der Blechzuschnitt aus Aluminium, vorlackiertem Stahl, rostfreiem Stahl oder verzinktem Stahl ist.

7. Vorrichtung zur Herstellung eines rohrförmigen Wärmeisolierelements aus Metallblech, wobei das Element (1) aus einem gebogenen Blechzuschnitt (9) gebildet ist, dessen zwei gegenüberliegende Längskanten (18, 19) entlang einer Längsverbindungslinie miteinander verbunden sind, wobei das Element eine umlaufende Erhöhung (11, 14, 15, 16) aufweist, die auf dem Blech nur in der Nähe wenigstens eines axialen Endes des Elements auf dem Umfang des Elements ausgebildet ist,
**dadurch gekennzeichnet, dass** sie nacheinander in einer zur Achse des herzustellenden Wärmeisolierelements senkrechten Durchlaufrichtung umfasst:
- eine Antriebsgruppe (5), um den Zuschnitt (9) flach in die Durchlaufrichtung (F) zu transportieren,
- eine Formwalzengruppe (61, 62), die Formrollen (65, 66) aufweist, um die Erhöhung am Rand des Zuschnitts auszubilden, und
- eine der Formwalzengruppe unmittelbar nachgeschaltete Biegegruppe (7), um den die Erhöhung aufweisenden Zuschnitt zu biegen, wobei die Biegegruppe (7) eine quer zur Durchlaufrichtung (F) bewegliche Biegewalze (71) sowie Mittel (73) zur Einstellung der Position der Biegewalze (71) relativ zu den Formwalzen (62) aufweist.

8. Vorrichtung nach Anspruch 7, wobei die Formwalzengruppe nacheinander in Durchlaufrichtung einen Satz Vorformwalzen (61) und einen Satz Fertigformwalzen (62) aufweist.

9. Vorrichtung nach Anspruch 7, wobei die Formrollen (65, 66) lösbar mit den Enden der Formwalzen (61, 62) verbunden sind.

10. Vorrichtung nach Anspruch 7, wobei die Enden der Formwalzen (61, 62) in an querverschieblichen Schlitten (68, 69) angeordneten Lagern (67) gelagert sind, um die Walzenenden für die Austauschbarkeit der Formrollen freigeben zu können und/oder die Verwendung von Walzen unterschiedlicher Längen zu gestatten.

11. Vorrichtung nach Anspruch 7, wobei die Biegewalze (71) an einem quer zur Durchlaufrichtung (F) beweglichen Schlitten (72) angeordnet ist.

12. Vorrichtung nach Anspruch 7, wobei die Antriebsgruppe (5) einen Satz Klemmwalzen (51) aufweist.

## Claims

1. A method for manufacturing a tubular, sheet metal heat-insulating element (1), said element consisting of a blank of roll-bent sheet, two opposing longitudinal edges (18, 19) of which are joined together along a longitudinal connecting line, said element comprising a peripheral relief (11, 14, 15, 16) formed on the sheet solely in the vicinity of at least one axial end of the element, consisting of an edge (12, 13) of the blank orthogonal to the longitudinal edges, on the periphery of the element, said relief affecting the sheet over its entire thickness,
**characterised in that** said relief is formed during travel on the edge (12, 13) of the sheet metal blank (9) held flat and caused to travel between two forming rolls (62a, 62b) in a direction (F) parallel to said edge, roll-bending of the blank comprising said relief then being performed by a bending roll (71) cooperating with one of the forming rolls (62a) to roll-bend the blank in a single pass as it exits the gap between the forming rolls, immediately after forming the relief during travel of the blank.

2. A method according to claim 1, in which the peripheral relief is formed in at least two forming steps, comprising a rough-machining step and a finishing step, performed in succession during travel of the sheet, each step being carried out by a set of two forming rolls.

3. A method according to claim 1, in which the peripheral relief comprises recessed or embossed peripheral moulding.

4. A method according to claim 1, in which the peripheral relief comprises necking or corrugation.

5. A method according to claim 1, in which the sheet metal blank has a thickness of 0.4 to 1 mm.

6. A method according to claim 1, in which the sheet metal blank is of aluminium, prepainted steel, stainless steel or galvanised steel.

7. An apparatus for manufacturing a tubular, sheet metal heat-insulating element, said element (1) consisting of a blank (9) of roll-bent sheet, two opposing longitudinal edges (18, 19) of which are joined together along a longitudinal connecting line, said element comprising a peripheral relief (11, 14, 15, 16) formed on the sheet solely in the vicinity of at least one axial end of the element, on the periphery of the element,
**characterised in that** it comprises in succession, in a direction of travel perpendicular to the axis of the heat-insulating element to be produced:
- a drive unit (5) for conveying the blank (9) flat in the direction of travel (F),
- a set of forming rolls (61, 62) comprising forming rollers (65, 66) for forming the relief on the edge of the blank, and
- a roll-bending unit (7), situated immediately downstream of the set of forming rolls, for roll-bending the blank comprising said relief, the roll-bending unit (7) comprising a bending roll (71) mobile transversely of the direction of travel (F) and means (73) for adjusting the position of the bending roll (71) relative to the forming rolls (62).

8. An apparatus according to claim 7, in which the set of forming rolls comprises, in succession in the direction of travel, a set of rough-machining rolls (61) and a set of finishing rolls (62).

9. An apparatus according to claim 7, in which the forming rollers (65, 66) are connected detachably to the ends of the forming rolls (61, 62).

10. An apparatus according to claim 7, in which the ends of the forming rolls (61, 62) are supported in bearings (67) mounted on carriages (68, 69) displaceable transversely to enable release of the ends of the rolls to ensure forming roller interchangeability and/or to enable the use of rolls of different lengths.

11. An apparatus according to claim 7, in which the bending roll (71) is fitted on a carriage (72) mobile transversely of the direction of travel (F).

12. An apparatus according to claim 7, in which the drive unit (5) comprises a set of pinch rolls (51).
